# EUROPEAN PATENT APPLICATION

(11) **EP 3 206 277 A1**
(43) Date of publication of application: **16.08.2017**
(21) Application number: 17152711.2
(22) Date of filing: 23.01.2017
(51) Int. Cl.: H02J 4/00, H02J 3/00, H02J 3/38

(54) **VEHICLE DYNAMIC POSITION POWERING SYSTEM AND METHOD**

(30) Priority: 12.02.2016 GB 201602562
(71) Applicant: Endersby, Daniel, Chester CH2 1AJ (GB); Clarke, Nicholas, Leicester, Leicestershire LE7 7PL (GB); Cheong, Wai, Leicester, Leicestershire LE7 7PL (GB)
(72) Inventor: Endersby, Daniel, Chester CH2 1AJ (GB); Clarke, Nicholas, Leicester, Leicestershire LE7 7PL (GB); Cheong, Wai, Leicester, Leicestershire LE7 7PL (GB)
(74) Representative: Wynne-Jones, Lainé and James LLP

(57) **Abstract**

A vehicle dynamic position powering system and method are disclosed for powering a vehicle drive unit for controlling the dynamic positioning of the vehicle. The system comprises:
- a plurality of power conditioning units for receiving electrical power from a remote electrical power source;
- coupling means for electrically coupling the power conditioning units to the remote electrical power source;
- a power distribution network for distributing electrical power from each power conditioning units to a vehicle drive unit for controlling the dynamic positioning of the vehicle; and,
- a switching arrangement for selectively electrically decoupling one or more power conditioning units from the vehicle drive unit, in dependence of an operational state of the respective power conditioning unit.

## Description

The present invention relates to a vehicle dynamic position powering system and method and particularly, but not exclusively to a vehicle dynamic position powering system and method for offshore vehicles.

The maintenance of offshore wind farms comprising a number of wind turbines is presently carried out by large offshore vessels. These vessels are positioned at a particular offshore site and subsequently maintained localised over a particular area of the seabed while the maintenance is performed. The localisation requires continuous supervision and control of the vessel by one or more operators to accommodate factors which act to displace the vessel from the desired location, such as wind speed, wind direction, sea current and the force of the sea current.

The so-called dynamic positioning of the vessel is achieved by the one or more operators controlling several thrusters associated with the vessel, to counter any fore/aft and port/starboard deviations. The power supply to these thrusters is traditionally provided by diesel engines and owing to marine compliance standards for dynamic positioning, two or more engines are required, such that the vessel can maintain position even if one of the engines fail.

Dynamically positioned vessels operate at inefficient power levels since the typical power supplied by an engine is less than the maximum available. The engines of a vessel operate at this reduced power so that in the event that one or more engines fail, the other engines can accommodate the loss by increasing their power output. It is found that diesel engines operate most efficiently when producing approximately 80% of their maximum power output. However, the diesel engines associated with dynamic positioning typically provide only 50% of their maximum output during normal use, so that a power reserve remains in place in case of failure of one or more engines.

We have now devised a vehicle dynamic position powering system and method.

In accordance with the present invention as seen from a first aspect, there is provided a vehicle dynamic position powering system for powering a vehicle drive unit for controlling the dynamic positioning of the vehicle, the system comprising:
- a plurality of power conditioning units for receiving electrical power from a remote electrical power source;
- coupling means for electrically coupling the plurality of power conditioning units to the remote electrical power source;
- a power distribution network for distributing electrical power from the plurality of power conditioning units to a vehicle drive unit for controlling the dynamic positioning of the vehicle; and,
- a switching arrangement for selectively electrically decoupling one or more power conditioning units from the vehicle drive unit in dependence of an operational state of the respective power conditioning unit.

In an embodiment, the system further comprises a plurality of power storage units for storing electrical energy from the remote power source, and for supplying electrical power to a respective power conditioning unit. Preferably, the power storage units comprise battery units.

In an embodiment, the vehicle comprises a water based vessel and the system further comprises a buoyancy device for maintaining the coupling device above a water level.

In an embodiment, the system further comprises a hydrocarbon fuelled generator, such as a petrol and/or diesel engine, for providing electrical power to the distribution network and/or the power storage units.

In accordance with the present invention as seen from a second aspect, there is provided a vehicle dynamic position powering method for powering a vehicle drive unit for controlling the dynamic positioning of the vehicle, the method comprising:
- electrically coupling a plurality of power conditioning units to a remote power source;
- distributing electrical power from the plurality of power conditioning units to a power distribution network;
- selectively electrically decoupling one or more power conditioning units from the vehicle drive unit, in dependence of an operational state of the respective power conditioning unit.

In an embodiment, the method further comprises storing at least a portion of the electrical energy received from the remote power source to a plurality of power storage units, for supplying electrical power to a respective power conditioning unit.

In an embodiment, the method further comprises monitoring the operational state of each power conditioning unit.

In an embodiment, the method further comprises storing electrical energy generated using a hydrocarbon fuelled generator to the plurality of power storage units.

Embodiments of the present invention will now be described by way of example only, and with reference to the accompanying drawings, in which:
Figure 1 is a schematic illustration of a vehicle dynamic position powering system according to an embodiment of the present invention; and,
Figure 2 is a flowchart illustrating the steps associated with a method according to an embodiment of the present invention.

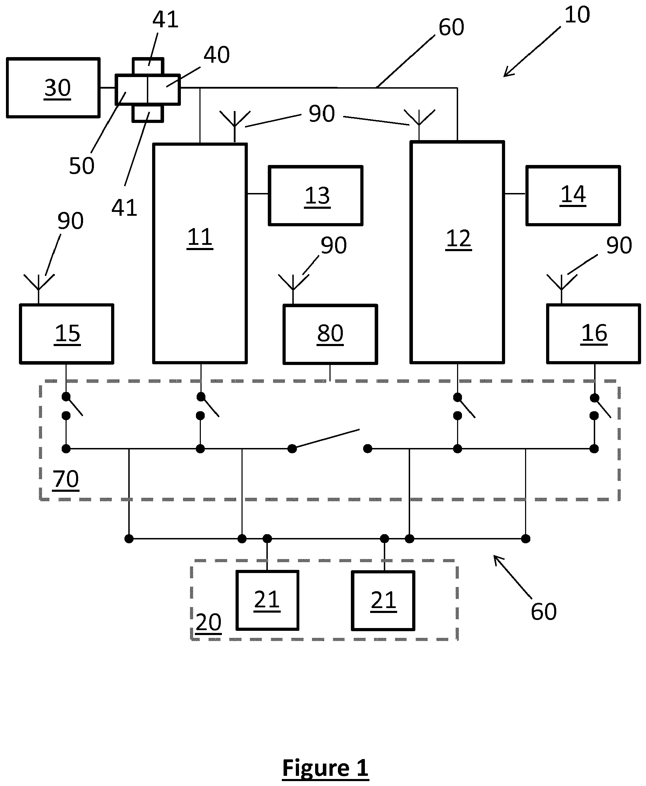

Referring to figure 1 of the drawings, there is illustrated a vehicle dynamic position powering system 10 according to an embodiment of the present invention for supplying electrical power to a drive unit 20 of the vehicle (not shown). In an embodiment, the vehicle may comprise a floating platform or vessel and the drive unit 20 may comprise one or more thrusters 21 for controlling the position of the vessel relative to an offshore remote power source 30, such as a wind turbine or oil rig, for example. The system 10 comprises a plurality of power conditioning units 11, 12, only two of which are illustrated for clarity, which are arranged to receive electrical power from the remote power source 30 via coupling means, such as an electrical connector 40. The connector 40 may be disposed at a free end of a cable (not shown) associated with the system 10, and is arranged to couple with a connector 50 associated with the remote power source when the vessel is suitably positioned. The cable and/or connector 40 may further comprise a buoyancy device 41 for maintaining the connector 40 above a water level.

The power conditioning units 11, 12 may separately comprise one or more transformers (not shown) for conditioning the power received from the remote power source 30 for use by the drive unit 20. Each power conditioning unit 11, 12 is electrically coupled to a power distribution network 60, which may comprise a network of cables for example, for communicating the electrical power to the drive unit 20. The distribution network 60 further comprises a switching arrangement 70 for selectively decoupling one or more of the power conditioning units 11, 12 from the drive unit 20 via the distribution network 60. The choice of which power conditioning unit 11, 12 is used to power the drive unit 20 is determined by a processor 80 associated with the switching unit 70.

The processor 80 is arranged to monitor the operational state of each of the power conditioning units 11, 12 via a state signal which is communicated from each power conditioning unit 11, 12 to the processor 80 via a communications channel 90, which may be a wired or wireless channel. In normal operation, the drive unit 20 is powered by each power conditioning unit 11, 12. However, in the event that the state signal indicates a fault associated with the one of the power conditioning unit 11 for example, then the processor 80 is arranged to change the switched state of the switching arrangement 70 to electrically isolate the faulty power conditioning unit 11 from the drive unit 20. However, the drive unit 20 can continue to operate by drawing electrical power from the remaining power conditioning units 12. In this respect, it is envisaged that each power conditioning unit 11, 12 will provide only a portion of the total electrical energy required by the drive unit 20. For example, in situations where the system comprises four power conditioning units (not shown), then in normal operation, each will be arranged to provide only 25% of the electrical power required by the drive unit 20. In the event that one unit develops a fault, then the remaining three units will increase their electrical output to 33% of the electrical power required by the drive unit 20, so that the drive unit 20 can continue to operate normally.

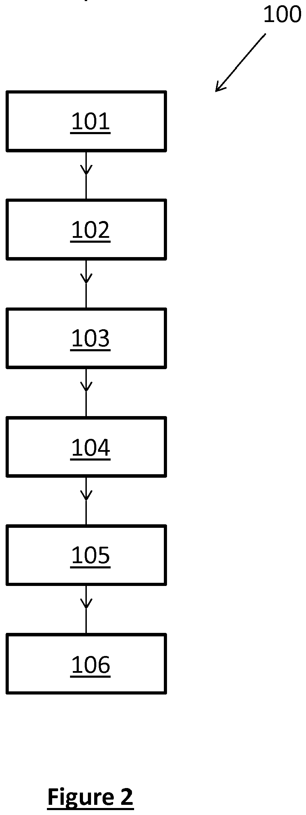

The system 10 further comprises a plurality of electrical storage devices 13, 14, only two of which are illustrated for clarity, arranged in electrical communication with the remote energy source 30. The plurality of storage devices 13, 14 may comprise a respective battery bank, capacitor bank or similar, for powering a respective power conditioning unit 11, 12 when the remote power source 30 is disconnected from the system 10. Referring to figure 2 of the drawings, there is illustrated a vehicle dynamic position powering method 100 according to an embodiment of the present invention, for powering a vehicle drive unit 20 for controlling the dynamic positioning of the vehicle. In use, once the vessel (not shown) has been suitably located at the desired offshore site, for example, the system 10 described above is first electrically coupled to the remote power source 30 via the electrical connectors 40, 50 at step 101, so that the plurality of power conditioning units 11, 12 receive electrical power from the remote power source 30. The electrical power is subsequently distributed from the power conditioning units 11, 12 via the distribution network 60 and the switching arrangement 70 at step 102 to the drive unit 20. The operational state of each power conditioning unit 11, 12 is monitored at step 103 by the processor 80, via the state signal, and in the event that a fault develops with one or more of the power conditioning units 11, 12, then the switching arrangement 70 is arranged to electrically decouple the faulty unit 11 (for example) from the drive unit 20 at step 104. The remaining power conditioning units 12 are arranged to subsequently increase their electrical output at step 105, so that the drive unit 20 continues to receive the required electrical power for normal operation. The power conditioning units 11, 12 thus provides a power supply redundancy for the drive unit 20, so that the drive unit 20 can remain operational even if one or more power conditioning units 11 fail.

The method further comprises storing electrical energy within each power storage unit 13, 14 at step 106 so that electrical energy can continue to be supplied to a respective power conditioning unit 11, 12, once the remote power source 30 has been electrically uncoupled from the system 10. In a further embodiment, the system may further comprise hydrocarbon fuelled electrical generators 15, 16, such as petrol and/or diesel engines for generating electrical power to the drive unit 20 in situations where the system 10 is uncoupled from the remote power source 30 and where the primary and energy storage units 13, 14 have been depleted of their electrical energy reserve. The generators 15, 16 may be electrically coupled to the power distribution network 60 and communicatively coupled with the processor 80 via the communications channel 90, similar to each of the power conditioning units 11, 12. However, the delivery of electrical power from the generators 15, 16 to the distribution network 60 is controlled by the processor 80 and one or more of the generators 15, 16 may be electrically isolated from the distribution network 60 in the event a respective generator 15, 16 develops a fault. It is envisaged that the generators 15, 16 may be used as a further back-up or emergency energy source for powering the drive unit 20 of the vehicle. In a further embodiment, it is envisaged that the engines 15, 16 may be further used to recharge the energy storage units 13, 14.

From the foregoing therefore, it is evident that the system and method of the present invention provide for a reduced burning of hydrocarbons or similar fuel to power the vessel when in a dynamic positioning mode, thereby reducing the level of harmful emissions.

## Claims

1. A vehicle dynamic position powering system for powering a vehicle drive unit for controlling the dynamic positioning of the vehicle, the system comprising:
- a plurality of power conditioning units for receiving electrical power from a remote electrical power source;
- coupling means for electrically coupling the plurality of power conditioning units to the remote electrical power source;
- a power distribution network for distributing electrical power from the power conditioning units to a vehicle drive unit for controlling the dynamic positioning of the vehicle; and,
- a switching arrangement for selectively electrically decoupling one or more power conditioning units from the vehicle drive unit, in dependence of an operational state of the respective power conditioning unit.

2. A vehicle dynamic position powering system according to claim 1, further comprising a plurality of power storage units for storing electrical energy from the remote power source, and for supplying electrical power to a respective power conditioning unit.

3. A vehicle dynamic position powering system according to claim 2, wherein the plurality of power storage units comprise battery units.

4. A vehicle dynamic position powering system according to any preceding claim, wherein the vehicle comprises a water based vehicle.

5. A vehicle dynamic position powering system according to claim 4, further comprising a buoyancy device for maintaining the coupling device above a water level.

6. A vehicle dynamic position powering system according to any preceding claim, further comprising a hydrocarbon fuelled generator for providing electrical power to the distribution network.

7. A vehicle dynamic position powering method for powering a vehicle drive unit for controlling the dynamic positioning of the vehicle, the method comprising:
- electrically coupling a plurality of power conditioning units to a remote power source;
- distributing electrical power from each of the plurality of power conditioning units to a power distribution network;
- selectively electrically decoupling one or more power conditioning units from the vehicle drive unit, for controlling the dynamic positioning of the vehicle, in dependence of an operational state of the respective power conditioning unit.

8. A vehicle dynamic position powering method according to claim 7, further comprising storing electrical energy received from the remote power source to a plurality of power storage units, for supplying electrical power to a respective power conditioning unit.

9. A vehicle dynamic position powering method according to claim 7 or 8, further comprising monitoring the operational state of each power conditioning unit.

10. A vehicle dynamic positioning powering method according to any of claims 7 to 9 further comprising storing electrical energy generated using a hydrocarbon fuelled generator to the plurality of power storage units.
